(19) Europäisches Patentamt / European Patent Office / Office européen des brevets

(11) **EP 4 261 740 A1**

(12) **EUROPEAN PATENT APPLICATION**
published in accordance with Art. 153(4) EPC

(43) Date of publication:
**18.10.2023 Bulletin 2023/42**

(21) Application number: **21903496.4**

(22) Date of filing: **10.12.2021**

(51) International Patent Classification (IPC):
**G06N 3/00** (2023.01)       **G06N 10/00** (2022.01)

(52) Cooperative Patent Classification (CPC):
**G06N 3/00; G06N 10/00**

(86) International application number:
**PCT/JP2021/045541**

(87) International publication number:
**WO 2022/124400 (16.06.2022 Gazette 2022/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.12.2020  JP 2020204758**

(71) Applicant: **Tenrai Inc.**
**Tottori, 689-4401 (JP)**

(72) Inventor: **MITSUYOSHI, Shunji**
**Tokyo 113-8654 (JP)**

(74) Representative: **Meissner Bolte Partnerschaft mbB**
**Patentanwälte Rechtsanwälte**
**Postfach 86 06 24**
**81633 München (DE)**

(54) **ROBOT, AND COMMUNICATION METHOD**

(57)    A robot 10 includes an input device 21 configured to input biometric information handling emotional information of a human 70, a quantum gate 31 configured to simultaneously input a continuous change amount and a discrete separation quantity of the biometric information and output a plurality of functions derived through cutting of the continuous change amount and the discrete separation quantity, a quantum gate 41 configured to input a plurality of functions and output a function of a summarized state through summarization of the plurality of functions, and a communication device 60 configured to transmit the function of the summarized state to another robot 10.

Fig. 12

**Description**

**Cross-reference to related applications**

This application is based on Japanese Patent Application No. 2020-204758 filed on December 10, 2020, the contents of which are incorporated herein.

**Technical Field**

The present invention relates to a robot and a communication method of the robot.

**Background Art**

The consciousness of a robot is considered to be created by a new neural network function having, for example, emotion emergence, plasticity, memory, generation, and branching (judgment). The new neural network function is considered to be newly constructed from the close relationship between nerve receptors related to emotion and memory clarified in neuromedical research and the discovery of a transmission system that is not limited to ion exchange. Among such new neural network functions, the one that has an identity by distinguishing the oneself from others is called an "artificial ego". As disclosed in Non-Patent Documents 1 and 2, research on artificial egos is in progress.

Citation List

Non-Patent Documents

Non-Patent Document 1: "Moral Decision Making in Autonomous Systems: Enforcement, Moral Emotions, Dignity, Trust, and Deception", IEEE, Vol.100, March 2012
Non-Patent Document 2: "Technologist's magazine", Vol.22

**Summary of invention**

Technical Problem

The human brain uses both analog information processing and digital information processing, but deep learning, which is being actively researched and developed in recent years, simply replaces the complex information processing of the human brain with the simple probability theory, and thus does not bear any resemblance to the natural functions of the human brain. With the known technique, it is difficult to cause robots to have a will and consciousness, and to realize robot thinking.

Therefore, an object of the present invention is to propose a technique for causing a robot to have a will and consciousness in the thinking of the robot. Further, another object of the present invention is to propose a technique for realizing thinking that can the will and the consciousness of the robot to be inherent.

Solution to Problem

In order to achieve the above-described objects, according to the present invention, a robot includes an input device configured to input biometric information handling emotional information of a human, a first quantum gate configured to simultaneously input a continuous change amount and a discrete separation quantity of the biometric information and output a plurality of functions derived through cutting of the continuous change amount and the discrete separation quantity, a second quantum gate configured to input a plurality of functions and output a function of a summarized state through summarization of the plurality of functions, and a communication device configured to transmit the function of the summarized state to another robot. This enables functional communication by thinking robots and humans.

The robot according to the present invention may further include an artificial ego engine configured to generate a plurality of functions expressing thinking of the robot. The second quantum gate may emerge a function that realizes a will or consciousness in thinking of the robot through summarization of the plurality of functions expressing the thinking of the robot. This makes it possible to realize thinking of the robot.

Two of the plurality of functions expressing the thinking of the robot may be a function having an inverse-summarization relationship and a function having a converse-inverse summarization relationship, with respect to one of the plurality of functions. This makes it possible to emerge a function that realizes a will and consciousness in the thinking.

Two of the plurality of functions expressing the thinking of the robot may be a function having an inverse-converse relationship and a function having an anti-inverse-converse relationship, with respect to one of the plurality of functions. This makes it possible to emerge a function that realizes a will and consciousness in the thinking.

A function of controlling the summarization by the second quantum gate may be a function representing changes in a superposition state of qubits by observation using waves and anti-waves. This makes it possible to emerge a function that realizes a will and consciousness in the thinking.

According to the present invention, there is provided a communication method performed by a robot. The communication method includes a step of inputting biometric information handling emotional information of a human through an input device, a step of simultaneously inputting a continuous change amount and a discrete separation quantity of the biometric information to a first quantum gate, and outputting, from the first quantum gate, a plurality of functions derived through cutting of the continuous change amount and the discrete separation quantity by the first quantum gate, a step of inputting the plurality of functions to a second quantum gate and outputting, from the second quantum gate, a function of a summarized state through summarization of the plurality of functions by the second quantum gate, and a step of transmitting the function of the summarized state to another robot through a communication device. This enables functional communication by a robot that thinks with a will and consciousness. Advantageous Effects of Invention

According to the present invention, it is possible to cause the robot to have a will and consciousness. In addition, according to the present invention, it is possible to realize the thinking of a robot having a will and consciousness and transmission of the thinking.

**Brief Description of Drawings**

Fig. 1 is a diagram summarizing a Neumann type logic gate and a quantum gate of the present invention.
Fig. 2 is a diagram for describing a concept of simultaneously calculating a continuous change amount and a discrete separation quantity.
Fig. 3 is a diagram illustrating a design of a logical symbol (Mitsuyoshi operator) used for the quantum gate.
Fig. 4 is a diagram for describing definitions of logical symbols for an operation instruction for the continuous change amount and the discrete separation quantity.
Fig. 5 is a diagram for describing an engineering principle and an output in an operation.
Fig. 6 is a diagram for describing a Riemann field and an anti-Riemann field.

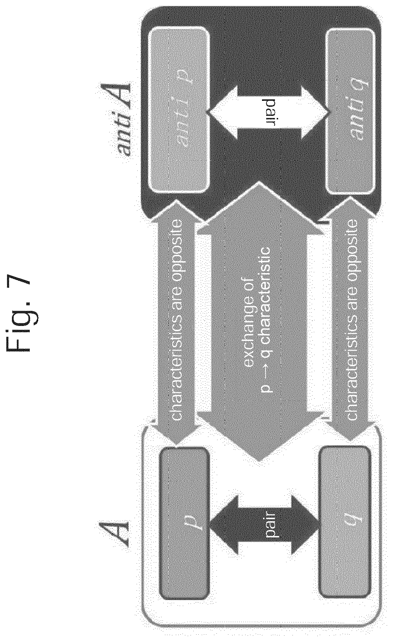

Fig. 7 is a diagram for describing an anti-relationship.
Fig. 8 is a diagram for describing a difference between cutting and summarization.
Fig. 9 is a diagram for intuitively describing a difference between cutting and converse, and converse-inverse summarization by using bands.
Fig. 10 is a diagram for intuitively describing a difference between cutting and summarization.
Fig. 11 is a diagram illustrating positions of KUs in a qubit.
Fig. 12 is an explanatory diagram illustrating a configuration of a robot according to an embodiment of the present invention.
Fig. 13 is an explanatory diagram of cutting and summarization.
Fig. 14 is an explanatory diagram of a definition of a logical expression.
Fig. 15 is an explanatory diagram of a definition of a logical expression.
Fig. 16 is an explanatory diagram of a definition of a logical expression.
Fig. 17 is an explanatory diagram of a definition of a logical expression.
Fig. 18 is an explanatory diagram of a function of the Mitsuyoshi operator.
Fig. 19 is an explanatory diagram of a definition of a logical expression.
Fig. 20 is a diagram illustrating a control method of the quantum gate.
Fig. 21 is an explanatory diagram of an empty set.
Fig. 22 is an explanatory diagram of the empty set.
Fig. 23 is an explanatory diagram of a definition of a logical expression.
Fig. 24 is an explanatory diagram that schematizes a relationship of logical expressions.
Fig. 25 is an explanatory diagram that schematizes a relationship of logical expressions.
Fig. 26 is an explanatory diagram that schematizes a relationship of logical expressions.
Fig. 27 is an explanatory diagram that schematizes a relationship of logical expressions.
Fig. 28 is an explanatory diagram of emergence.

Fig. 29 is an explanatory diagram of the emergence.

Fig. 30 is an explanatory diagram of a function that controls movement of a slider of the Mitsuyoshi operator.

**Description of Embodiments**

Hereinafter, embodiments of the present invention will be described with reference to the drawings. Here, the same reference numerals indicate the same constituent elements, and repetitive descriptions will be omitted.

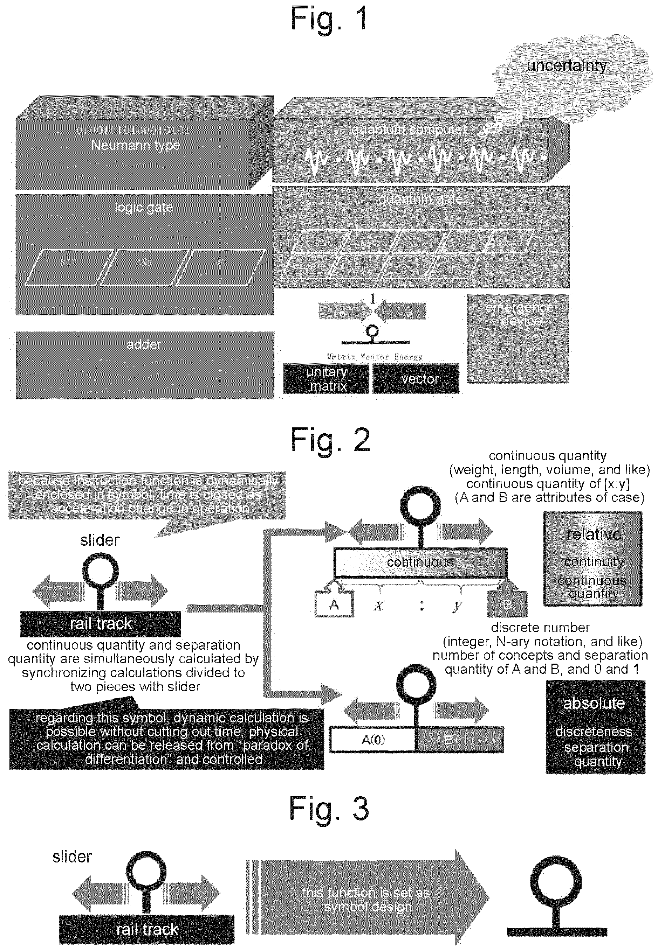

In recent years, quantum computers have been attracting attention, but a "quantum gate" corresponding to the logic gate of a normal computer does not deviate from the known Neumann computer principle and does not have a gate setting that makes the best use of quantum characteristics. Therefore, the present applicant devised "MU", "KU", "MGN(+)", "MGN(-)", and the like as a non-Neumann type quantum gate that can fully exhibit and control the quantum characteristics of uncertainty (see Fig. 1).

In order to realize such a quantum gate, the present applicant further expanded the calculation function of the "Mitsuyoshi operator" announced in 2006, and devised so that it is possible to simultaneously and spatially calculate a continuous change amount and a discrete separation quantity as the input. This makes it possible to output a "wave-like function" converted to a time axis. With the newly extended function of the "Mitsuyoshi operator", it is possible to construct the foundation in which Riemannian geometry is introduced into the N-dimensional complex Euclidean space, and thus a space frame is expanded. In addition, it is possible to realize a "non-Neumann type quantum gate" by quantum mechanical ideas in a certain N-dimensional unitary space that is an inner product space on a field of complex numbers. Such a quantum gate can be utilized in many fields such as calculation control of quantum computers and three-dimensional Euclidean space.

<Function Newly Extended for Logical Symbol (Mitsuyoshi Operator) Used for Quantum Gate>

Fig. 2 illustrates a model that symbolizes an engineering function of how to treat discrete numbers (such as concepts and thoughts) that are to be calculated simultaneously with the continuous change amounts drawn in gradation. That is, Fig. 2 illustrates an engineering model for simultaneously measuring and calculating the continuous change amount and the discrete separation quantity (discrete number). In Fig. 2, the symbols A and B are attribute symbols and represent discrete separation quantities such as the piece number and the concept number. Further, in Fig. 2, the symbols x and y represent physical continuous change amount such as a weight, a length, and a volume.

Here, the point to be noted is the synchronization characteristic of a slider illustrated in Fig. 2. The continuous change amount and the discrete separation quantity as the target of measurement and calculation need to be synchronized in order to perform measurement and calculation of the continuous change amount representing the relative state simultaneously with measurement and calculation of the discrete separation quantity representing the absolute state (strict rule). Thus, in 2006, the present applicant designed a symbol symbolizing the continuous change amount and the discrete separation quantity that move in synchronization, with a slider and a symbol (see Fig. 3).

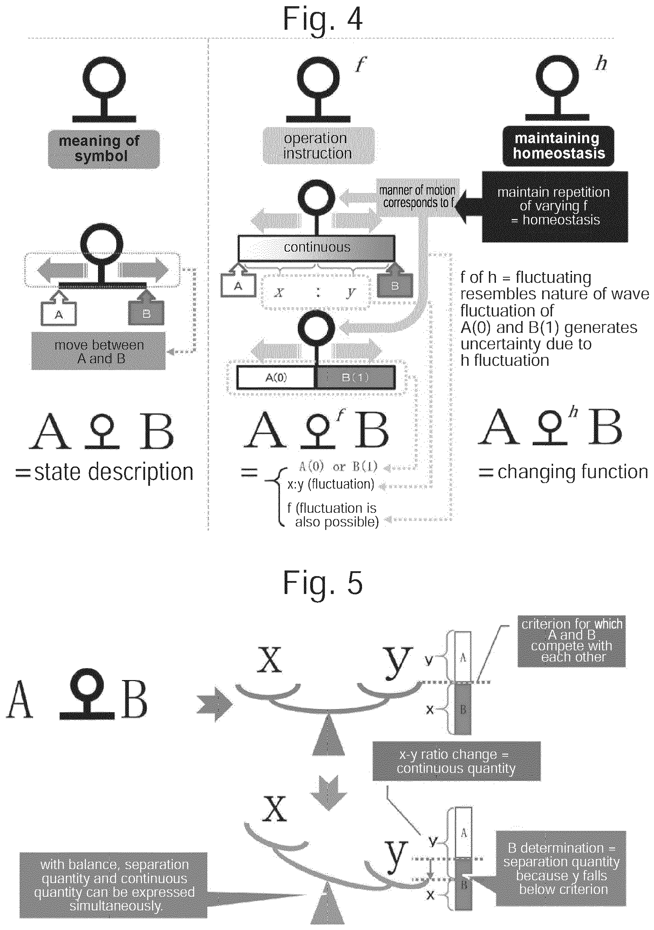

As illustrated in Fig. 3, the symbol $\underline{\Omega}$ is a new symbol for an operation instruction, and the present applicant set the name of the symbol to the Mitsuyoshi operator. The outer meaning of the symbol is "a slider moves between A and B". As illustrated in Fig. 4, when the Mitsuyoshi operator is used as a logical symbol or an arithmetic operator, the Mitsuyoshi operator functions as means for dynamically and continuously calculating the continuous change amount existing between A and B based on a boundary for dividing A and B at a ratio of x:y. Further, the Mitsuyoshi operator functions as means for, with the boundary for dividing A and B, for example, discretizing the continuous change amount to symbolize the continuous change amount into concept numbers such as 0 and 1. In addition, the movement of the handle part of the slider is expressed with a function f by adding the function f as the superscript at the right shoulder like the symbol

$$\underline{\Omega}^{f}.$$

For example, when the function of functional characteristics is set as f(x) and the fluctuating function is set as h, homeostasis (constancy) derived from signal processing of waves existing in the natural field and living organisms can be expressed as h = f(x).

In the generally known calculation principles so far, a specific method for simultaneously calculating the concept number and the continuous physical quantities has not been established. Therefore, as a unique engineering method, a structure for simultaneously calculating the continuous change amount and the discrete separation quantity synchronized with each other by the slider is defined (see Fig. 5).

As illustrated in Fig. 5, if the symbol is replaced into a scale in the operation A -2. B, it is possible to consider an intention of causing x and y to go onto the plates of the scale. The weight x of A and the weight y of B are physical continuous change amount. Thus, considering that the movement of the scale rod corresponds to the movement of the slider of the symbol , the state where the rod of the scale settle horizontality, and then the weights of A and B compete with each other is defined as the standard of the slider. With such a standard, it is possible to perform AB determination of discretely determining A or B by using the symbol . For example, in Fig. 5, y is lowered from the standard by the increased quantity of B, and thus it is possible to determine B as the discrete separation quantity.

This calculation principle is generally continuous (analog) and discrete (digital) simultaneous calculation, so the principle of a non-Neumann type computer can be seen as opposed to the principle of a Neumann type computer that calculates discretely in binary. Also, if the Feynman's matrix vector and Fourier series transformation are learned, it can easily be understood that the rail part of the operator is considered as a matrix and the position indicated by the handle part is considered as a vector in the actual calculation, so it is easy to know that the energy can be expressed as a vector. In addition, it is quick to understand tensor fields that treat vectors that are not affected by coordinate transformation. It can be understood that, in scalar> vector> tensor, the Mitsuyoshi transformation for calculating the energy field is performed, for example, by converting the tensor into a vector like Fourier series transformation. In addition, in the calculation principle shown in the "spacetime calculation concept in the anti-Einstein field (DHU JOURNAL, vol.06, 2019, pp.3-14)", which is obtained by advancing this operator, phase transition by breaking through zero (quantum gate MU) from the three-dimensional relationship between the two operators has been described by division into functions sets of the slider vector and the movement of the handle.

<Description of TOE Axiom Using Extended Function of Mitsuyoshi Operator>

In interpreting Einstein's theory of relativity, a Riemann sphere obtained by three-dimensionally projecting a point on a two-dimensional complex plane onto a three-dimensional sphere can be technically used. Here, a three-dimensional sphere used when the mapping between points on the complex plane and points on the Riemann sphere is considered is called the Riemann sphere. By using the Riemann sphere, in particular, $1/0 = \infty$ can be interpreted smoothly. In other words, if a line representing mapping from the point at infinity on the complex plane to the point at infinity (north pole point) on the surface of the Riemann sphere extends infinitely, the intersection between the line and the Riemann sphere becomes the north pole point. However, in this case, the position of the center of gravity, which should be at the origin, is lifted to infinity, so it is considered that this merely explains that "infinite acts are infinite". Furthermore, if the diameter of the Riemann sphere is set to 1, it can be interpreted that the length of 1 is a distance from 0 to $\infty$, but there is a problem that it cannot be deeply considered what the diameter of the Riemann sphere means at time of division by zero. For example, in the Riemann sphere, even if a vector with a start point of $\infty$ and an end point of 0 is selected for a pair of vectors with a start point of 0 and an end point of $\infty$, and a binomial operation in which the sum of the vectors is a vector having a length of 0 (distance 0) is defined, it is difficult to proceed consideration from here because there is no natural phenomenon that can be explained by this definition. Thus, the unnaturalness of shifting the center of gravity to the north pole point due to convergence to $\infty$ remains unsolved. As described above, the problem of division by zero has not been solved even in the Riemann sphere, and, in mathematics, it has been considered that there is no expansion of the system beyond division by zero. In addition, since interpretation is not possible in physics, it has not been deeply considered, such as that the solution of division by zero does not exist, or that it is simply interpreted as representing infinity. In this case, gravity becomes infinite at zero distance, and it has been pointed out that there is a contradiction and collapse in the second law of thermodynamics "energy conservation".

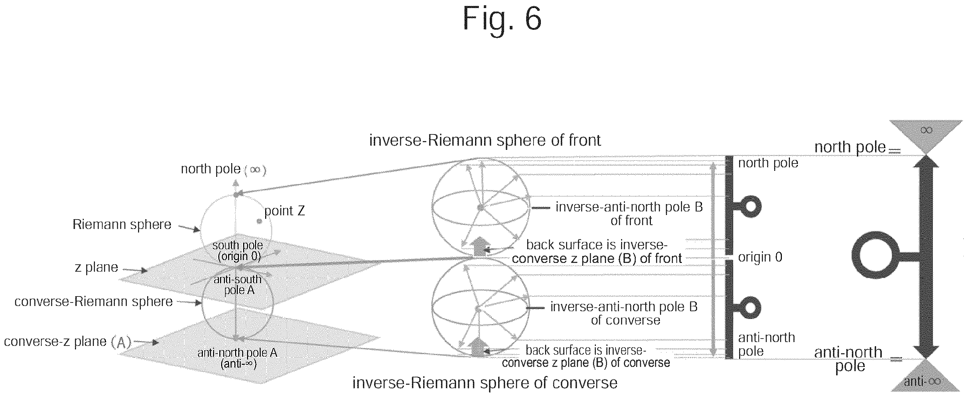

Therefore, the present applicant has considered an anti-Riemann field using both a converse-Riemann sphere and an inverse-Riemann sphere. First, "Converse" and "Inverse" in propositional logic, and "anti" in the relationship between particles and anti-particles are defined. Then, an anti-Einstein field is derived by using this definition. In other words, by defining emergence as anti-0[0=>1] and using the function of the Mitsuyoshi operator as means for simply connecting the quantum theory and the theory of relativity, the present applicant has derived the hypothesis that ($0 \equiv \infty$) = 1 is established (DHU JOURNAL, vol.06, 2019, pp.3-14). Thus, it can be easily understood that, by using the model illustrated in Fig. 6, the problem of division by zero in Einstein, in which the position of the center of gravity that should have been at the origin was lifted to $\infty$ (north pole point), is solved by returning center of gravity to the origin.

Further, it was mathematically proved that the Mitsuyoshi operator is ($0 \equiv \infty$) = 1 (everything). This makes it possible to compress the diameter of the Riemann sphere at zero distance and obtain the zero distance, and makes it possible to express the radiation state from the white hole beyond the black hole. The effect of returning to the main field from the field emerged by summarization with the radiation of the white hole is the source of causing emergence in the main field. It is considered that, in order to realize a non-Neumann type quantum computer, functions "ANT", "CON", "INV" that connect physical quantum theory and relativity by the Mitsuyoshi operator are used for quantum gates "MU", "KU", "MGN(+)", and "MGN(-)". Here, "ANT", "CON", and "INV" respectively correspond to "anti", "converse", and "inverse". In addition, "MU", "KU", "MGN(+)", and "MGN(-)" respectively correspond to "0 point of the Riemann sphere", "0 point existing at the center of KU and ANT-KU", "north pole of the Riemann sphere", and "anti-north pole of the anti-Riemann sphere". ANT-KU corresponds to the 0 point (anti-south pole) of the anti-Riemann sphere where KU is shifted by ANT.

TOE (Theory Of Everything) does not currently exist. In other words, there is no theory that simultaneously describes the quantum theory and the general theory of relativity in the gravitational field. Therefore, the present applicant showed that the quantum theory and the Einstein field are connected by the Mitsuyoshi operator by simply controlling "spacetime" without contradiction, and that the universe including the entire universe has a structure of $(0 \equiv \infty) = 1$. That is, regarding the question about division by zero that "what happens to gravity when the distance from the center of gravity is zero for the Schwarzschild solution, which is one of the exact solutions of the Einstein's formulas", the answer that, "since it can be assumed that it will never be less than the minimum possible unit that can be taken by time and space (probably about the plank length), the physical quantity such as zero distance does not exist" is generally known. The present applicant has derived $0 \equiv \infty$ from division by zero with the Mitsuyoshi operator, compressed the diameter from 0 of the Riemann sphere to $\infty$, and calculated the zero distance by the Mitsuyoshi operator. A theory of the phase transition from a black hole opened as a gate to a white hole is constructed based on this calculation. This theory describes the structure of the universe from the point of view seen from the outside of the universe. At the same time, it also shows the possibility that the existence outside the universe is created by the emergence sign anti-0. On the other hand, there is a phenomenon called "spontaneous breaking of symmetry" proposed by Yoichiro Nambu in 1961. According to Nambu's theory, it has been confirmed that a symmetrically energetically stable physical system transitions asymmetrically. In addition, a low energy state and a phenomenon called "pair production" are also known.

Based on the two phenomena, the present applicant has proposed a model in which attribute reversal can be considered in a geometric structure like a Klein bottle to approach the TOE. In the Klein bottle (Klein plane), a structure in which the front surface and the back surface are connected to each other near the base part of the handle (self-intersection part), and cannot be oriented in the entire plane is defined. On the other hand, in quantum mechanics, anti-matter points out existence that attributes of particles configured by the same mass and spin as those of a certain matter, but a point that the matter and the anti-matter can be simultaneously observed shows that a four-dimensional surface (geometric structure) that cannot be attached, such as the Klein plane, exists, and the attribute reversal may be caused on a path on this surface. In other words, the attribute in the TOE can be seen as being shown in the observable state in a geometric structure in which the relationship between two things caused by the existence of matter and anti-matter has a loop structure. Therefore, the present applicant focused on the vicinity of the base part of the handle, and first performed examination in which the path on the Klein plane, the front, and the back was set as the relationship (function), the attribute, and the converse of the attribute.

Question 1: Is it possible to express the loop structure like the Mobius band seen near the self-intersection part of the Klein plane by a relational expression of two things?

Question 2: Is it possible to express the attribute reversal seen near the self-intersection part of the Klein plane by a relational expression of two things?

If the attribute reversal of Question 2 is defined with an expression, the problems can be simultaneously solved. Therefore, the propositional logic is extended. First, the attribute is represented by a logical expression. This is because the relationship between two things is the essence of attributes, and the relationship between two things can be represented by a logical expression. For example, when the attribute of a certain matter is set to be (p —> q), anti-matter is defined as the converse of (q —> p). Then, "anti" is defined relatively. In order to avoid confusion between expressions such as anti in the relationship between "matter and anti-matter'" and anti in the relationship between "system and anti-system", "anti" is defined as a word for modifying objects whose the quantity and movement are exactly the same but whose constituent elements have completely opposite characteristics. For example, the concept of "converse" (opposite position or state without passing through the origin) and minus (negative) in coordinates becomes "anti". "Anti" in this case indicates that the anti-matter (converse) due to polarity reversal mainly for matter (direct) becomes anti, and the converse including the contraposition becomes anti. Thus, for example, anti-matter has an anti-relationship with matter, and matter has an anti-relationship with anti-matter. As described above, if the condition of what is the main subject changes, the aspects and attributes change in opposite. This is called "anti in a broad sense" as the attribute reversal. Furthermore, the contraposition is separated into two to connect direct and anti. This corresponds to the work of inserting scissors into a simple band (loop) without twisting and opening the band, when creating a Mobius band. Only when the front and front of the band are separated, the front and back can be connected. When the contraposition is separated into two, two types of backs are defined. In other words, two types of backs are defined, for example, when p —> q is set to the front, the back indicating that p and q are turned over individually like (inv-p) $\rightarrow$ (inv-q), and the back indicating that the relationship between p and q is turned over as it is like (inv-(p$\rightarrow$q)). Thus, there is no room for introducing twists into the known propositional logic systems that do not distinguish between ((inv-q) —> (inv-p)) and (inv-(q$\rightarrow$p)), but, in

the propositional logic system that distinguishes two contrapositions such as converse of inverse and inverse of converse, a room for allowing introduction of twists can be generated. Therefore, if the relationships are organized one by one such that all the relational expressions, not only inverse and converse, are symmetrical with respect to MU on the assumption that there is MU at the center of (inv-(q→p)) and (inv-(q→p)), attribute reversal by emergence makes it possible to reconnect the extended propositional logic systems in a twisted manner by using the Mitsuyoshi operator.

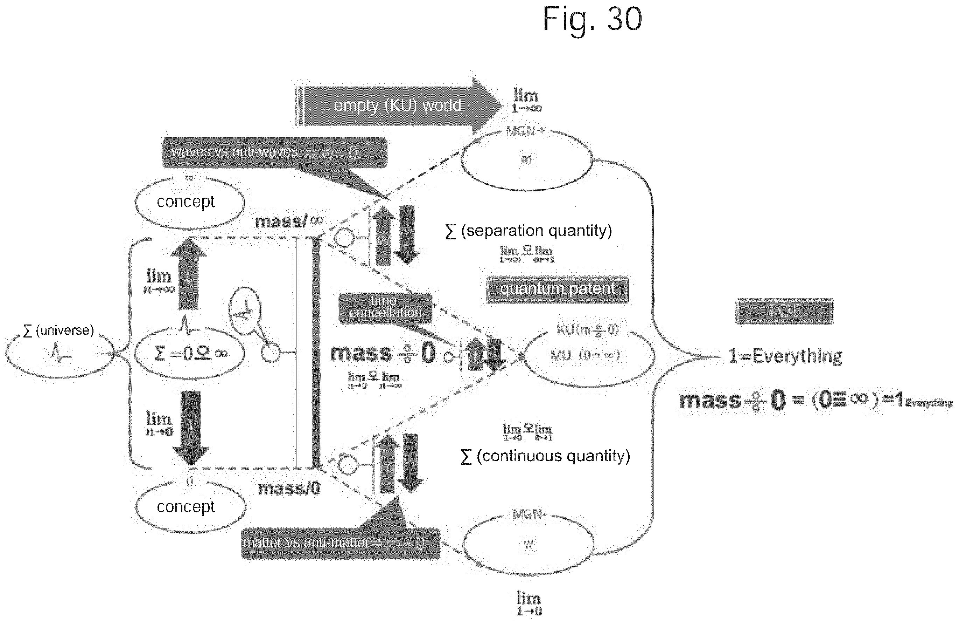

The propositional logic system extended by the Mitsuyoshi operator can be naturally matched with the extension of the Riemann sphere to the inverse and converse. For example, if vectors whose the start point is anti-∞ and the end point is 0 in the converse-Riemann sphere are selected as a pair of vectors whose the start point is ∞ and the end point is 0 in the Riemann sphere, a model in which, when the sum of the pair becomes a vector having a length 0 (distance 0), this 0 coincides with all of 0 (KU) in the Riemann sphere, 0 (ANTI-KU) in the converse-Riemann sphere, and 0 (MU) between KU and ANTI-KU can be constructed. In addition, the point that the Riemann sphere and the converse-Riemann sphere have an attribute reversal relationship means that 0 and ∞ of the Riemann sphere correspond to ∞ and 0 of the converse-Riemann sphere, respectively, and can show that the two spheres form a pair for creation and annihilation. In addition, as in Fig. 30, the emergence can be defined as an extreme state in which fluctuations of waves and anti-waves antagonizes with fluctuations of matter and anti-matter.

The present applicant has defined "emergence" as a phenomenon in which a symmetrically energetically stable vacuum generated by pair formation of "infinite + anti-infinite" and "empty set: anti-empty set" moves to a system that is symmetrically low in energy while reversing attributes. Due to the pair formation at the time of emergence, the center of gravity is biased in the Einstein field that assumes only the Riemann sphere, and thus an asymmetric state occurs. However, in the anti-Einstein field that assumes anti-Riemann spheres such as the converse-Riemann sphere and the inverse-Riemann sphere, the center of gravity is kept at the center and the symmetrical state can be maintained, and thus the symmetrical state can be maintained. Furthermore, if an emergence symbol that generates 0 to 1 is defined and the generated 1 is regarded as the sum of all things that can be counted in N-ary notation, it can be understood that expressions of the pair production or the pair annihilation in quantum mechanics are treated as being (countable) obtained by counting the number of particles or anti-particles included in the sum in N-ary notation. That is, if emergence is understood by combining "division of 1" and "N-ary notation" in mathematics, the function becomes countable in the N-ary notation through the division or integration of the sum. It can also be understood that the emergence means that the form in which 1 of the sum is divided and integrated immediately after generation appears, as described above. The movement of energy accompanied by attribute reversal due to emergence is called phase transition.

<Cutting>

Cutting is an arithmetic that uses the Mitsuyoshi operator to cut numbers and quantities (functions, waveforms, and the like). Cutting is different from division. For example, division of one object into two pieces can be considered. If the mass of an object is used as the reference 1 and is divided into two halves, there are two pieces having 0.5 mass. Replacing the conventional division operator ÷ with the symbol cut and expressing the state in which one object is divided into two fragments by a mathematical expression, Expression (1) is obtained.

$$ 1 \text{ cut } 2 \; = \; A(x) \, \male \, B(y) \quad \cdots \quad (1) $$

Where A(x) indicates the left fragment of the object and B(y) indicates the right fragment of the object. As described above, the "concept", "number", and "quantity" of objects that form a pair on the left and right can be described by a single mathematical expression. Here, under the condition that the sum (A(x)+B(y)) of the right side of Expression (1) is constant, for example, focusing on the pair (x, y) of the continuous change amount such as the length, which is another aspect of A and B being the "concept", each of x and y changes continuously while maintaining the sum, by moving the slider of the Mitsuyoshi operator. As described above, the present applicant named the concept of capturing a plurality of continuous change amounts as one entity that balances within the sum as "Quantal" in the book "ST exceeds IT" in 2002. Quantal can be represented by the Mitsuyoshi operator.

<Summarization>

Summarization is an arithmetic that uses the Mitsuyoshi operator to summarize a plurality of numbers and quantities (functions, waveforms, and the like). Summarization is different from multiplication. The Summarization of infinite functions f(x1), f(x2), f(x3), ..., and f(x∞) can be described by using, for example, the tensor product, as in Expression (2).

$$f(x1) \otimes f(x2) \otimes f(x3) \otimes \cdots \otimes f(x\infty) = m \quad \cdots \quad (2)$$

<Robot>

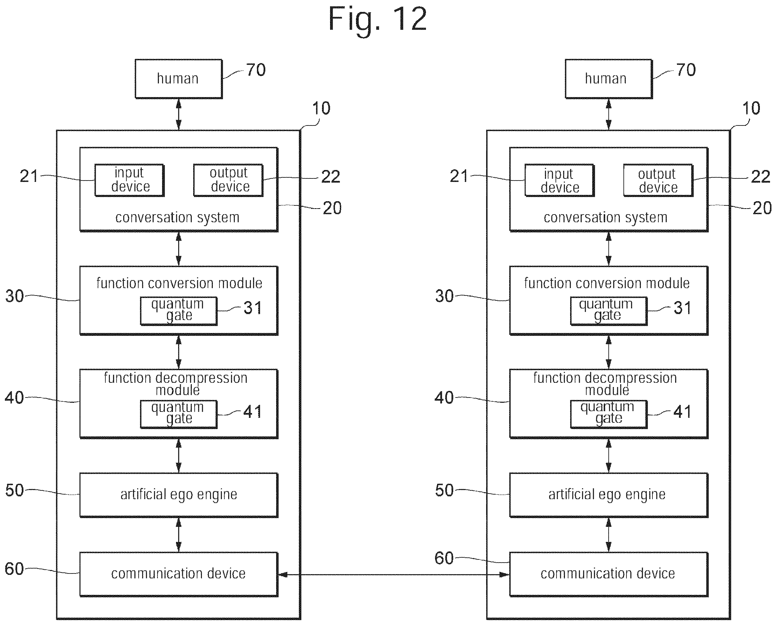

Fig. 12 is an explanatory diagram illustrating a configuration of a robot 10 according to the embodiment of the present invention. In order to realize the autonomy of the robot 10, that is, the emergence of a will and consciousness (awakening, attention, awareness), a functional quantum gate technique that has been newly devised is used based on mathematical interpretations without depending on classical quantum mechanics. The goal of the idea and consciousness is that the robot 10 can have an autonomous free conversation, and realizing the free idea in communication with the human 70 is considered to be autonomy itself. The robot 10 that is the alter ego or incarnation of the human 70 is particularly called an avatar.

The robot 10 understands the consciousness or emotion of the human 70 by replacing the consciousness or emotion with a function. For example, since the will of the human 70 has a directionality (orientation) toward a goal resulting from moral adjustment of drive, the directionality can be expressed by a vector-valued function. Regarding will, how it moves toward a goal can be expressed as a curve, that is, a function. For example, when the will is reproduced by a computer such as the robot 10, the present applicant assumes that the direct field is the ideal world including matters and waves, and the anti-field is the anti-ideal world including anti-matters and anti-waves. The present applicant supposes that the emergence of will using a pair of direct and anti is possible, under such assumption. In addition, since the consciousness of the human 70 is a space formed by a plurality of perceptions caused by will, the consciousness can be expressed as a space in which a plurality of vector-valued functions is spanned.

The robot 10 includes a conversation system 20, a function conversion module 30, a function decompression module 40, an artificial ego engine 50, and a communication device 60.

The conversation system 20 is a system for voice conversation with human 70, and includes an input device 21 that inputs voice information from the human 70 and an output device 22 that outputs voice information to the human 70. The input device 21 has, for example, a function corresponding to the sense of hearing of the robot 10. The output device 22 has, for example, a function corresponding to the vocalization organ of the robot 10. The voice information from the human 70 is an example of biometric information handling emotional information of the human 70.

The function conversion module 30 includes a quantum gate 31. The function conversion module 30 uses the quantum gate 31 to convert voice information from the human 70 into a plurality of functions. The quantum gate 31 is a Mitsuyoshi operator that performs cutting.

The function decompression module 40 includes a quantum gate 41. The function decompression module 40 uses the quantum gate 41 to generate a function of a summarized state through summarization of a plurality of functions. The quantum gate 41 is a Mitsuyoshi operator that performs summarization. The plurality of functions summarized by the summarization of the quantum gate 41 may be a plurality of functions converted from the voice information of the human 70 by the function conversion module 30, or a plurality of the functions that is generated by the artificial ego engine 50 (described later) and expresses thinking of the robot 10.

The artificial ego engine 50 is an operating system that understands a will, consciousness, or emotions of the human 70 based on functions that describe the will, the consciousness, or the emotions of the human 70, has an ego, and thinks autonomously. The artificial ego engine 50 can, for example, receive a plurality of functions converted from the voice information of the human 70 by the function conversion module 30, and understand the will, the consciousness, or the emotions of the human 70 from the received plurality of functions. The artificial ego engine 50 may, for example, generate a plurality of functions that express the thinking of the robot 10 (for example, drive toward a certain goal and the like). The artificial ego engine 50 may, for example, receive the function of the summarized state from another robot 10 and understand the will, the consciousness, or the emotions of the human 70 or the other robot 10 from the function of the summarized state.

The communication device 60 performs data communication with other robots 10 by wireless communication or wired communication. The communication device 60 can transmit and receive the functions of the summarized state to and from other robots 10.

In the above-described example, voice information is exemplified as an example of biometric information handling emotional information of the human, but the biometric information handling the emotional information of the human is not limited to the voice information. For example, information on facial expressions, gestures, and behaviors, electrocardiogram information, blood pressure information, electroencephalogram information, myoelectric information, and the like may be used.

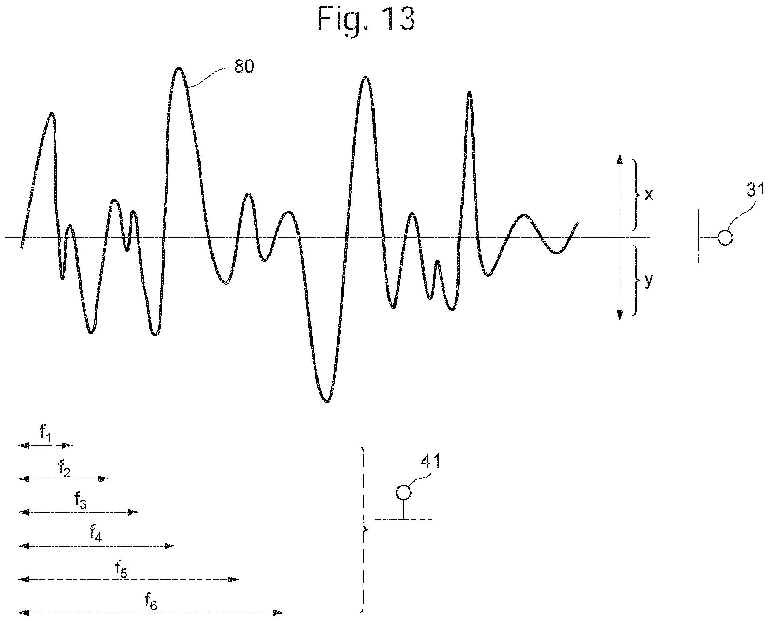

Next, cutting by the quantum gate 31 and summarization by the quantum gate 41 will be described with reference to Fig. 13. In Fig. 13, the reference numeral 80 indicates voice information of a human 70 who converses with the robot 10. The quantum gate 31 simultaneously inputs a continuous change amount and a discrete separation quantity of voice information 80 and outputs a plurality of functions derived through cutting of the continuous change amount and the discrete separation quantity. As the plurality of functions derived by cutting, six functions f1, f2, f3, f4, f5, and f6 illustrated in Fig. 13 are exemplified for convenience of description. The number of functions derived by cutting is not limited to six. The continuous change amount of the voice information 80 is raw data (analog data) of the voice information 80, for example. The discrete separation quantity of the voice information 80 is, for example, digital data of the voice information 80 subjected to digital signal processing (for example, Fourier transform).

In the quantum gate 31, a criterion (for example, a hormone secretion amount determined for each type of hormone) is set in advance as an index for evaluating a will, consciousness, or emotion of the human 70. The quantum gate 31 cuts the voice information 80 according to criteria set in advance. In the process of performing cutting, the functions f1, f2, f3, f4, f5, and f6 are derived as functions representing the movements of sliders of the Mitsuyoshi operators. A mechanism in which the artificial ego engine 50 updates the criterion as the index for cutting is also conceivable. For example, there may be a mechanism that updates the criterion in a behavior-suppressive (depressive tendency) manner when the will generated by the summarization (described later) is not well realized, and updates the criterion in a behavior-promoting (manic tendency) manner when the will is well realized.

A function that expresses the temporary will, consciousness, or emotion of the human 70 in a certain situation is called a virtual function, and a function that qualitatively expresses the will, consciousness, or emotion of the human 70 is called a meta-function. The meta-function corresponds to a superordinate concept of the virtual function. In the example illustrated in Fig. 13, the function fn is a virtual function derived from the features of the voice information 80 for n cycles, for an integer n that takes values from 1 to 6. The function f(n+1) is a virtual function derived from the features of the voice information 80 for (n+1) cycles, and is also a meta-function including the function fn as the virtual function. The function f(n+1) corresponds to a superordinate concept of the function fn.

The quantum gate 41 inputs a plurality of functions f1, f2, f3, f4, f5, f6, and outputs a function of a summarized state through summarization of the plurality of functions f1, f2, f3, f4, f5, f6. For example, a vector-valued function can be exemplified as the function of the summarized state through summarization. The vector-valued function is a function suitable for treating the will and consciousness as vectors. The reason is that all vectors are orthogonal by summarization, time and space disappear, and the process when emergence occurs is easy to describe using the vector-valued function.

Since the function of the summarized state through summarization qualitatively and quantitatively represents the will, consciousness, or emotion of the human 70, it is considered that the function has a data amount smaller than the data amount of a case where data representing the will, consciousness, or emotion of the human 70 in every possible situation is collected. Such a function can be used for functional communication as means for controlling the action of the robot 10. For example, when a certain robot 10 receives, from another robot 10, a function that qualitatively expresses the will, consciousness, or emotion of a human 70 (a function of a summarized state through summarization), the artificial ego engine 50 of this robot 10 can think of things in a thinking manner similar to that of the human 70. Further, for example, a certain robot 10 transmits, to a plurality of other robots 10, a function that qualitatively expresses the will, consciousness, or emotion of a human 70 (a function of a summarized state through summarization), so that each robot 10 can be controlled to perform an action similar to that of the human 70.

<Emergence of Consciousness>

Before describing the principle of emergence of consciousness, the definition of "anti" will be described.

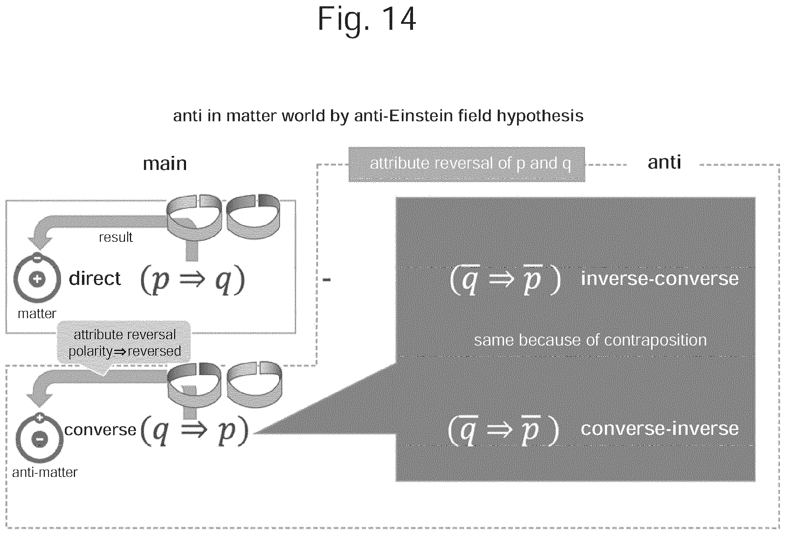

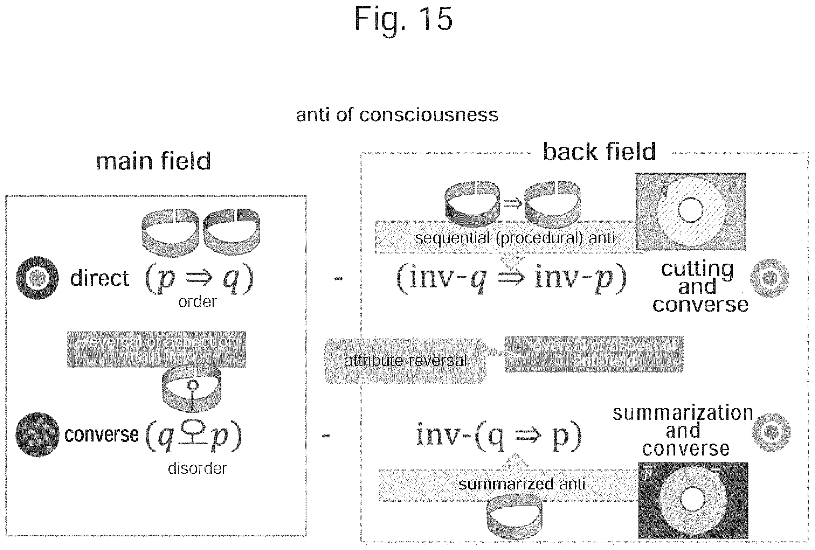

Fig. 14 graphically illustrates the definition of "anti" in the "anti-Einstein field hypothesis" disclosed in the paper of the present inventors (DHU JOURNAL, vol.06, 2019, pp.3-14). As can be seen from Fig. 14, in the "anti-Einstein field hypothesis", the viewpoint of the observer was at the positive position. Therefore, direct was treated as the field of "main", and converse and contraposition (inverse-converse and converse-inverse) were treated as the field of "anti". Here, "anti" indicates that the polarity is reversed by attribute reversal. Then, the present applicant schematized that the definition of "anti" changes dynamically depending on the viewpoint, as illustrated in Fig. 15. In Fig. 15, based on the point that matter and anti-matter exist in the universe, direct and converse are collectively defined as the main field. Here, "anti" indicates that the hue is reversed by attribute reversal. "Cutting and converse" and "summarization and converse" are provided in "inverse-converse", and "cutting and converse" and "summarization and converse" mutually have a relationship of aspect reversal. "Cutting and converse" is a procedural connection of the inverse of q and the inverse of p for (q → p), and "summarization and converse" is the collective inverse of (q → p). As described above, the order (procedure) and summarization (summary) create different aspects and hues, making it possible to construct a mathematical theory that is different from the conventional contraposition. That is, if not-p or not-q is used as a mathematical expression of the inverse, the contraposition matches regardless of the order or summarization, but, if a difference in (inv-p) → (inv-q) or inv-(p → q) occurs depending on the order or summarization, an expression that the contraposition does not match can be obtained. As a result, the difference in hue and aspect is mathematically defined by the difference in procedure and summary as consciousness, so Fig. 15 is simply named the anti of the consciousness.

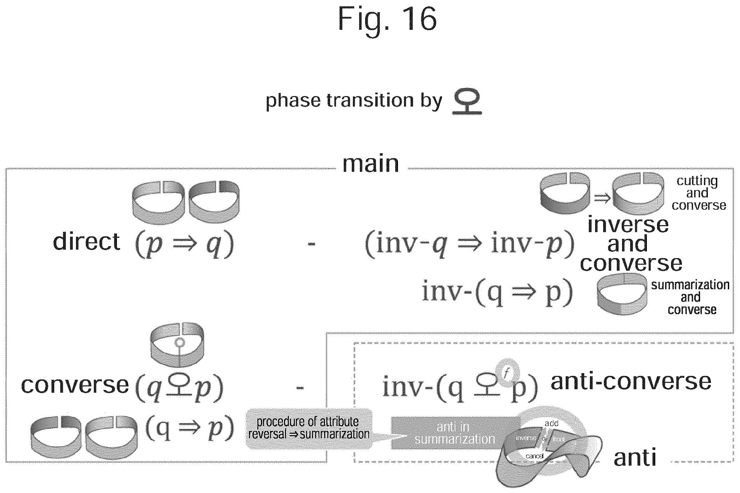

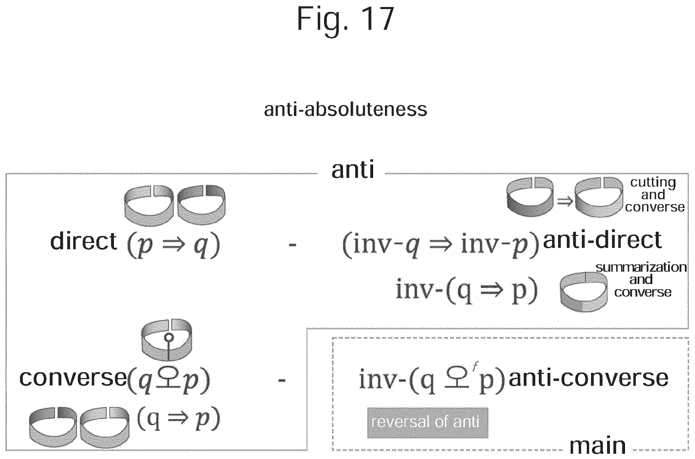

Considering purely the field of summarization and cutting as mathematics, if the field of cutting is set to the main, the opposite becomes as illustrated in Fig. 16. As a result, it is possible to clearly resolve the contraposition relationship remaining in Figs. 14 and 15. If the method of taking the main is changed, direct and anti are exchanged as illustrated in Fig. 17. From the relationship between Fig. 15, and Figs. 16 and 17, the difference in aspect and hue is relatively grasped by the method of taking the main, and the quantum uncertainty itself is treated as "a target of consciousness", so that "consciousness and sensibility, quirks" can be combined into a tense-insensitive function, which can be used in the functional communication described above.

By applying this definition and mathematical expressions, for example, information can be stored in the quantum world, and phase-transitioned through singular points such as black holes. As a result, as a new approach to solve the black hole information paradox, the black hole string (rubber band) can be interpreted from the front and back, and the black hole string that exist as local solutions by using the characteristic in which information in the quantum gate KU is convoluted by summarization and undergoes a phase transition can be used as a recording medium. That is, it becomes possible to suck information into a black hole and extract information sucked into a black hole.

For example, the antagonism and change between the force of nuclear fusion that repels the gravity from the inside in a star made of hydrogen, such as the sun, and the gravity of the star can be regarded as an event in the field of cutting. However, when this nuclear fusion of hydrogen inside becomes iron and weakens, the star shrinks due to the own gravity, and is shrinks toward the singular point with infinite density <state where the total mass is concentrated at a point with no volume>. At this time, if the star does not become a neutron star and is more than 30 times the size of the sun, the start becomes a black hole. At this time, if the distance between the event horizon and the singular point is set to KU, the rotating black hole can be controlled and the energy can be extracted. Thus, a method of treating the functions in this rotation and summarization as acceleration is considered first. In superstring theory, as in the general theory of relativity, the black hole is considered as a point with no volume and is not calculated, and a line with no volume is ring-shaped like a rubber band. Therefore, in the paper published in 2019 (DHU JOURNAL, vol.06, 2019, pp.3-14), the present applicant derived, by calculation, that this is an empty set and that it is "a state in which there is only a frame and no content". Then, the attribute reversal is considered as "only the content exists infinitely, but there is no frame", the anti-empty set was derived by calculation, and showed the relationship with the emergence of the universe in a mathematical expression. At this time, a method of causing phase transition can be considered by making the aspect in which this frame (ring of superstring theory) rotates at an ultra high speed into a function and convolving it into the summarization.

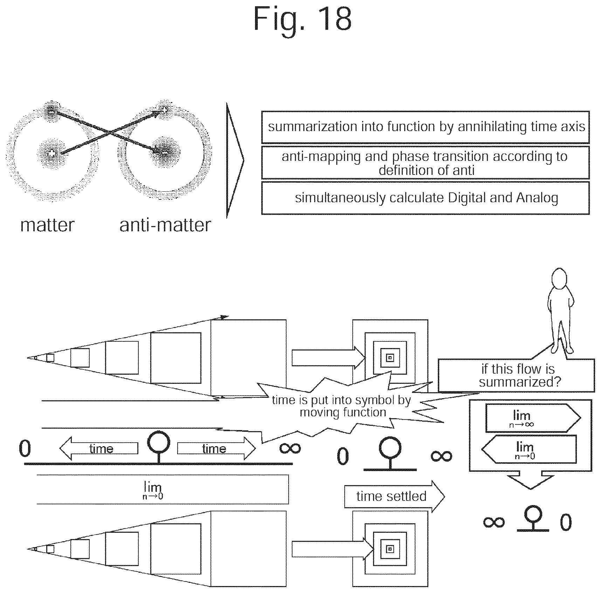

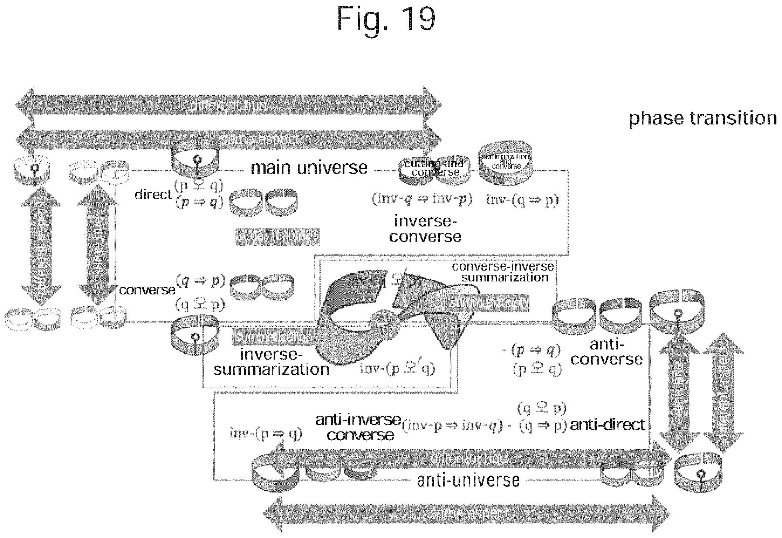

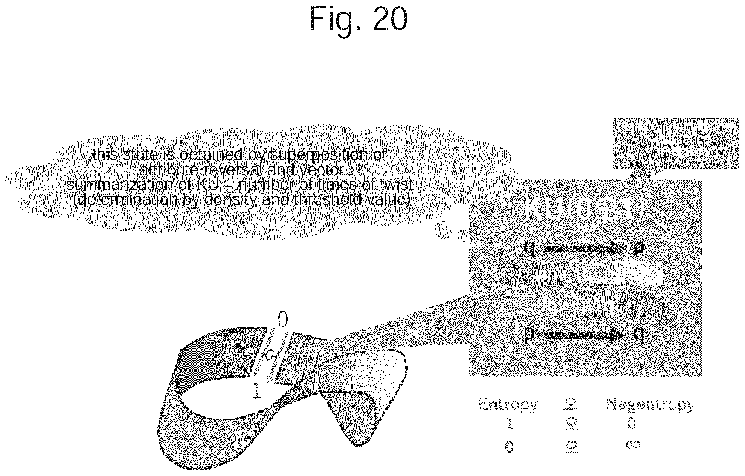

At this time, when the photon is in this ring state and in the ergo-sphere state in the back-to-front relationship described above, the gate to the white hole releases all pieces of the information indicating that the black hole has sucked so far as a vector or function thinking. Since the object moves faster than the speed of light inside this ergo-sphere, it can be assumed that there is a mechanism that causes the phase transition by the energy. If the function of the Mitsuyoshi operator that erases time illustrated in Fig. 18 is used, it is possible to resolve the limit problem of the speed of light by replacing the information inside the ergo-sphere with the function illustrated in Fig. 19. Thus, it is possible to realize functional quantum gate communication that transfers energy and information by the mechanism of phase transition inside the ergo-sphere. As illustrated in Fig. 20, this functional quantum gate can be controlled by the density of summarization. Thus, without bothering to create a black hole on the ground, this phase transition communication can be emulated and reproduced by the distortion of space-time when the change acceleration using the structure of a primitive gyro and a simulator on a computer, the sunlight, laser, and the like. In addition, the problem of what happens to quantum information in a black hole that shrinks due to Hawking radiation and the like is also preserved with the vector and the function by another universe by vector radiation from division by zero by converse-Riemannian. In addition, the Einstein's Cartan theory and the general theory of relativity have the problem of finding different solutions for the centers of dense black holes. However, the usefulness is secured by enabling mutual communication by the simultaneous calculation characteristic of continuity and separability of the Mitsuyoshi operator.

A frame of an empty set is prepared assuming a fast-rotating black hole as an absolutely unbreakable container. The limits in the frame can be expressed by a threshold value, so, when the limits exceed the threshold value, the surface area of the black hole increases. Then, when new information is put into the surface of the black hole, the information obtained by changing the surface of the black hole (the frame of the empty set) like ripples on the surface of the water is stored. This method advances the concept of a memory at once, and can store all types of information that exists in the universe as a functional memory. This memory can be said to be a cloud (server group) that erases the time of the present, the past, and even the future and stores it as a function due to the Mitsuyoshi operator effect. In other words, the holographic principle with high reproducibility is used as the storage means. For this reason, the three-dimensional information of a black hole is treated by the means of the present invention that converts the information stored in two dimensions into front and back (direct). As a result, three dimensions of front, back, and nothingness (the world of KU and MU, which is the inside of the empty set inside the black hole) are obtained, and the fourth dimension becomes MU, that is, absolute axisless. This has also been described in the paper in 2019 (DHU JOURNAL, vol.06, 2019, pp.3-14). As a result, even in the world of a two-dimensional black hole, if information is put into this world, it can be seen that a point that three-dimensional information is stored from the inverse world, which is between KU and MU, and reproduction and processing are possible as the anti-world becomes the Mitsuyoshi operator.

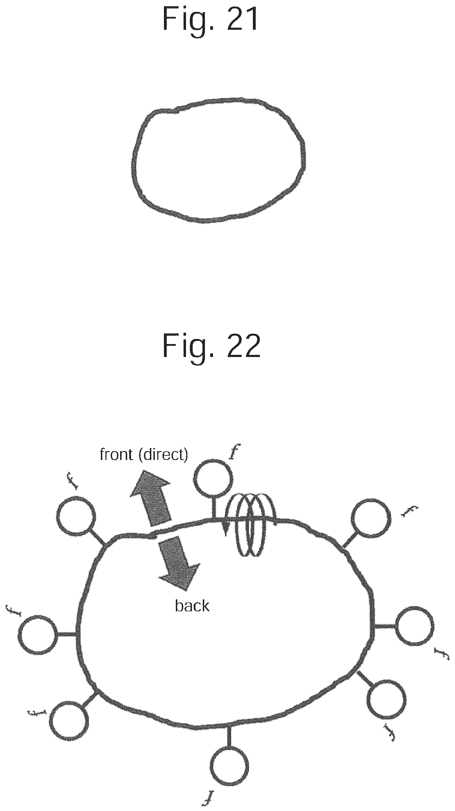

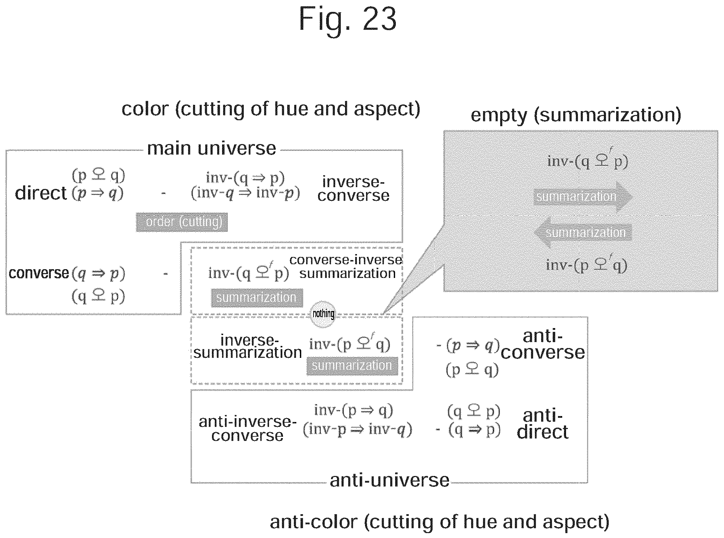

Fig. 21 represents the frame of the empty set that is the horizon of an event of a black hole and is the boundary of KU, by the string in the superstring theory. As illustrated in Fig. 22, the string illustrated in Fig. 21 stores information by using the Mitsuyoshi operator as the function, and the information is made three-dimensional by rotating the front and back on the boundary of KU as it is. This is the principle of memory means using the holographic principle with high reproducibility. Then, it becomes possible to define the field by storing the aspect in which the whole rotates as a meta-function. By treating this rotation as a tensor product, the calculation of inv (different inverse calculation from not in contraposition expression) in the summarization in KU in Fig. 23 is obtained. Inv in Fig. 23 is an abbreviation for Inverse, and rotation (spin) is in the same state as summarization. As a result, the limitation of the speed of light is annihilated with excluding the tense, and time is sealed as a rotating function by the Mitsuyoshi operator as illustrated in Fig. 22. Thus, the rotation problem exceeding the speed of light in the ergo-sphere is solved.

$$\lim_{n \to 0} \; \underset{}{\overset{\circ}{\curlywedge}} \; \lim_{n \to \infty} \quad \cdots \quad (3)$$

$$\overrightarrow{\lim_{1 \to 0}} \; \otimes \; \overrightarrow{\lim_{0 \to 1}} \quad \cdots \quad (4)$$

$$\text{inv-}(q \Rightarrow p) \; \otimes \; \text{inv-}(p \Rightarrow q) \quad \cdots \quad (5)$$

Regarding the summarization of KU given by Expression (3) (the summarization illustrated in Fig. 23), the pair of vectors given by Expression (4) can be expressed by Expression (5) in the vicinity of KU. Therefore, Expression (5) is also an expression of emergence in the Riemann field and the anti-Riemann field.

The artificial ego engine 50 generates a plurality of functions that express the thinking of the robot 10 by cutting and summarization. Here, since each function can be expressed by a logical expression, in the present invention, the logical expression of the functional quantum gate for (p —> q) is defined as follows.

Direct: (p --+ q) or (p $\overset{\circ}{\curlywedge}$ q)

Converse: (q --+ p) or (q $\overset{\circ}{\curlywedge}$ p)
Cutting and converse: (inv-q —> inv-p)
Summarization and converse: inv-(q→p)
Inverse and converse: cutting and converse, or summarization and converse
Converse-inverse summarization:

$$\text{inv-}(q \overset{\curlywedge^{f}}{} p)$$

Inverse summarization:

$$\text{inv-}(p \overset{\curlywedge^{f}}{} q)$$

Anti-inverse-converse: anti-cutting and converse or anti-summarization and converse
Anti-summarization and converse: inv-(p→q)
Anti-cutting and converse: (inv-p —> inv-q)

Anti-converse: (p --+ q) or (p $\overset{\circ}{\curlywedge}$ q)

Anti-direct: (q --+ p) or (q $\overset{\circ}{\curlywedge}$ p)

Where, (inv-p) is the inverse of p. This (inv-p) corresponds to ¬p (not p) in the general propositional logic. In addition, (inv-(p→q)) is the concept different from ¬(p→q) in the general propositional logic. That is, a resultant of the inverse of (p --+ q) as a whole is (inv-(p→q)).

As the general propositional logic, the definition of the following logical expression for (p —> q) is generally known.

Converse: (q → p)
Inverse: (¬p → ¬q)
Contraposition: (¬q → ¬p)

<Difference between (p —> q) and (p ⚷ q)>

The case where (p —> q) is false in the general propositional logic occurs only when q is false regardless of p being true. In the present invention, (p --+ q) is used as the temporal transition or spatial distribution of the concept. That is, the relation that it is false that, when p is established, p does not change to q is represented by a logical expression of (p —> q). The case where the true value can be configured as in the general propositional logic occurs when the propositions p and q are represented by discrete separation quantity (true or false, or 0 or 1). If (p —> q) is seen as the temporal transition or spatial distribution of the discrete separation quantity, it can be seen that this expresses an event in which p changes to q discontinuously with a certain boundary. Thus, if (p —> q) is seen as a function of time or space, the value of the function is uniform both in the definition area of p and the definition area of q, but thee function can be seen as having a discontinuous point at the boundary. On the other hand, it is possible to consider the continuous temporal transition or spatial distribution from p to q, and this is expressed as (p ⚷ q) by the Mitsuyoshi operator. If (p ⚷ q) is seen as the function of time or space, the function in which p and q have a continuous change amount in the respective definition areas and are smoothly connected to draw gradation near the boundary.

<Relationship between Cutting and Converse and Converse-Inverse Summarization, and Contraposition>

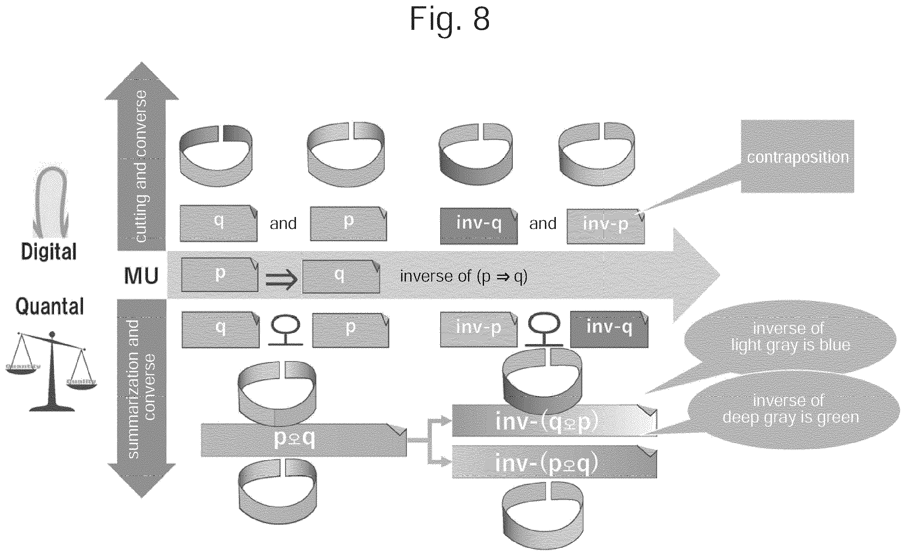

As in Fig. 8, due to the difference between (p --+ q) and (p ⚷ q), summarization and converse (inv-(q —> p)) and converse-inverse summarization

$$(\text{inv-}(q \stackrel{f}{\underline{\Omega}} p)$$

has a difference. In the general propositional logic, inverse of converse and converse of inverse are in contraposition, and thus necessarily coincides with each other. However, in the logical expression defined in the present invention, inverse of converse and converse of inverse are not limited to necessarily coinciding. The reason is as follows. That is, regarding (p —> q) representing the change of the discrete separation quantity, inverse of converse and converse of inverse can be considered as being similar to the general propositional logic. However, (p ⚷ q) represents the temporal change or spatial change of the continuous change amount from p to q. Even though it is natural that the change of the continuous change amount from q to p as the converse is represented by (q ⚷ p), it is necessary to make a strong condition that p and q are discrete separation quantities, in order to cause inverse of (q ⚷ p) to coincide with inverse of (q → p). Thus, in the present invention, the resultant of inverse of an event (q —> p) having a discrete separation quantity that changes in reversal by cutting is named cutting and converse (inv-q —> inv-p) and summarization and converse (inv-(q —> p)), and the resultant of inverse of an event (q ⚷ p) having a continuous change amount that changes in reversal by summarization is named converse-inverse summarization

$$(\text{inv-}(q \stackrel{f}{\underline{\Omega}} p).$$

<Understanding of Inverse using Images>

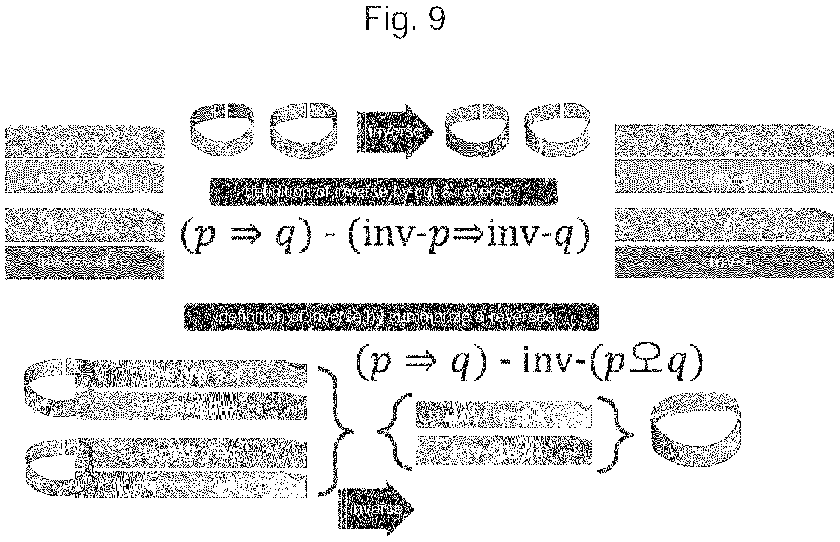

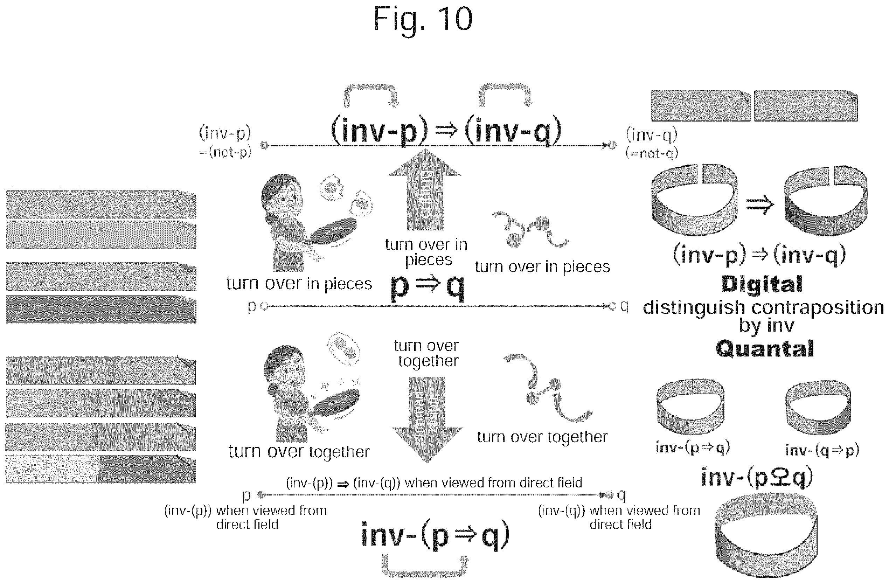

As illustrated in Fig. 9, the difference between cutting and converse, and converse-inverse summarization can be expressed by bands. Alternatively, the essential difference between cutting and converse, and converse-inverse summarization is in the difference between cutting and summarization, which can also be intuitively expressed by bands as in Fig. 10.

<Reason Why Contraposition is Divided into Cutting and Converse, and Converse-Inverse Summarization>

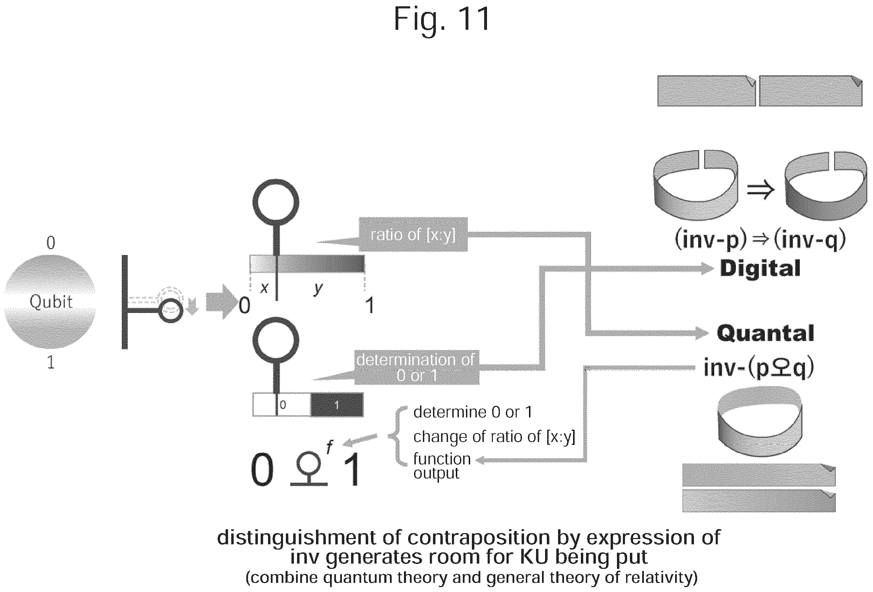

As illustrated in Fig. 11, with the point that cutting and converse does not coincide with converse-inverse summarization, there is room for KU being put in quantum bits (Qubits). As illustrated in Fig. 20, KU is considered as being between converse-inverse summarization

$$(\text{inv-}(q \stackrel{\Omega^f}{\longrightarrow} p))$$

and inverse-summarization

$$(\text{inv-}(p \stackrel{\Omega^f}{\longrightarrow} q)).$$

<Control of Emergence by Converse-Inverse Summarization and Inverse-Summarization>

In the "spacetime calculation concept in the anti-Einstein field (DHU JOURNAL, vol.06, 2019, pp.3-14))", in emergence in KU, it is assumed that summarization of extremity of n —> 0 and n —> ∞ occurs. Thus, as in Fig. 20, if the function that moves with 1 —> 0 in n —> 0 is represented by

$$(\text{inv-}(p \stackrel{\Omega^f}{\longrightarrow} q),$$

and the function that moves with 0 —> 1 in n —> - is represented by

$$(\text{inv-}(q \stackrel{\Omega^f}{\longrightarrow} p),$$

the emergence in KU in the Riemann field and the anti-Einstein field (anti-Riemann field) and the logical expression in the present invention point out the same. Thus, as illustrated in Fig. 20, overlapping (density) of the function and the threshold value are operated, and thus it is possible to control emergence by converse-inverse summarization and inverse-summarization. Further, as illustrated in Fig. 20, attribute reversal in emergence and superposition of the vector-valued function can be expressed as twists of the band. In addition, the determination of the density and the threshold value of the function can be expressed as determination of the number of twists.

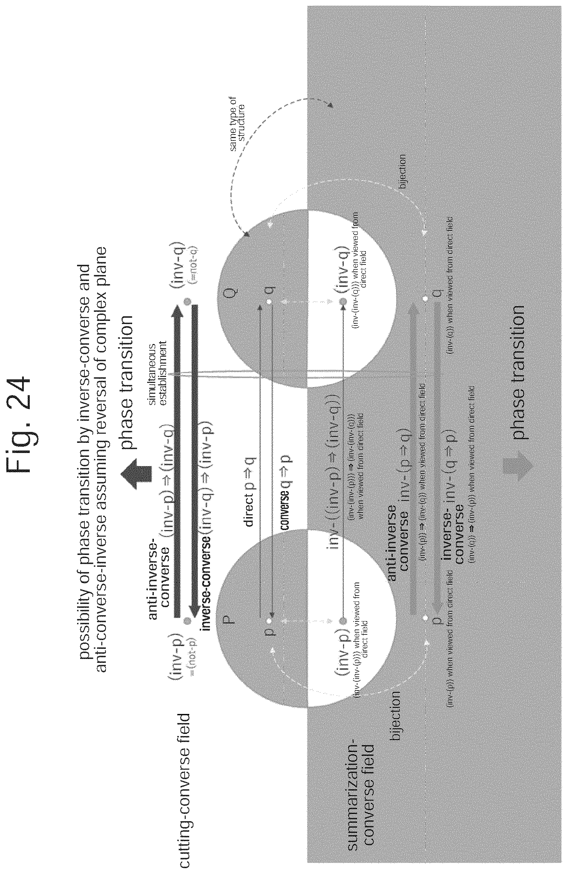

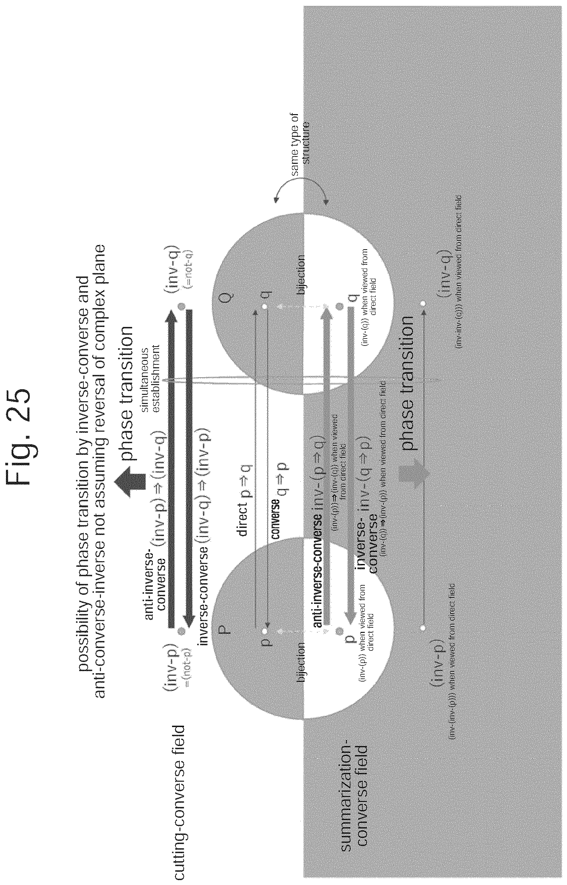

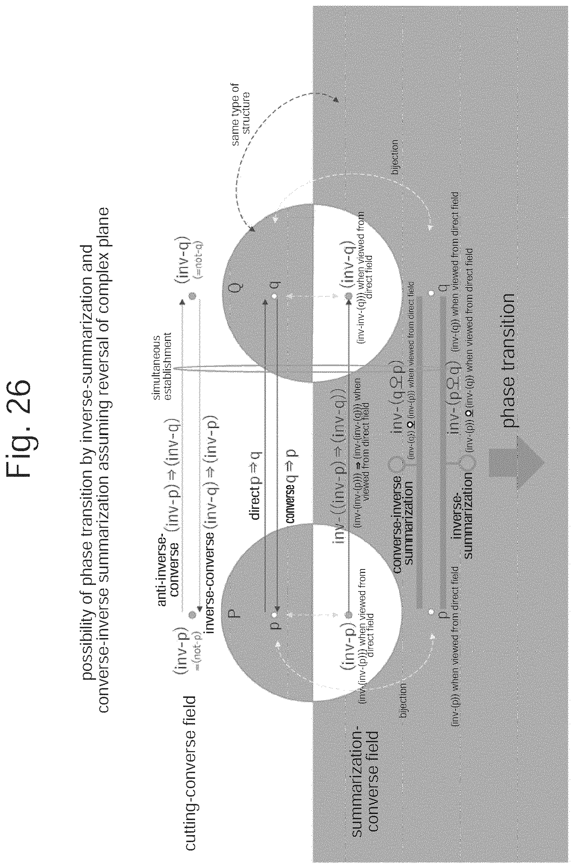

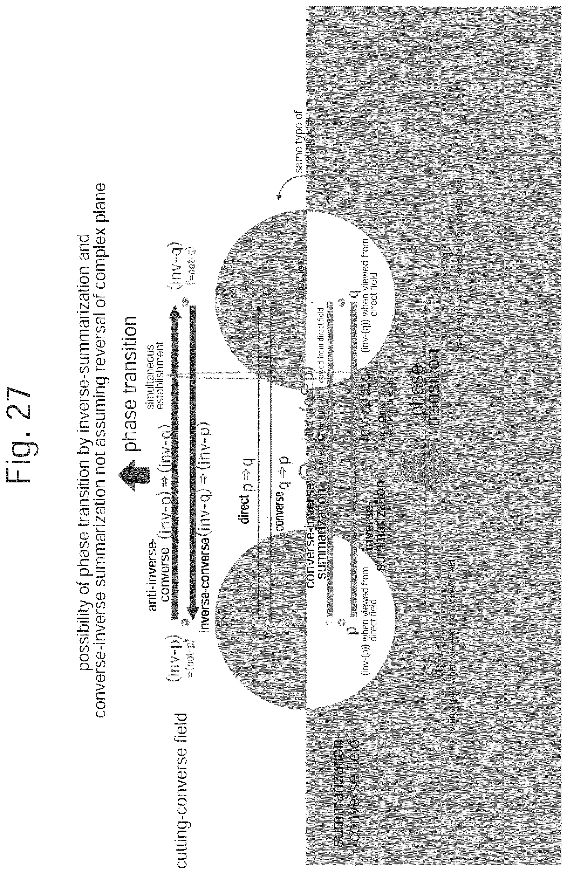

Figs. 24 to 27 illustrate the relationships among "direct", "converse", "inverse-converse", "anti-inverse-converse", "inverse-summarization", and "converse-inverse summarization". Figs. 24 and 26 have a premise of reversal of the complex plane, and Figs. 25 and 27 have a premise of reversal of the complex plane. Here, the reversal of the complex plane means transformation in which a certain complex number moves to a complex number whose the distance is reversed while the angle does not change in the polar coordinates. When two of a plurality of functions expressing the thinking of the robot 10 are a function (inv-(p $\stackrel{\Omega}{\longrightarrow}$ q) having a relationship of inverse-summarization and a function (inv-(q $\stackrel{\Omega}{\longrightarrow}$ p) having a relationship of converse-inverse summarization, with respect to any one function (p --+ q) of a plurality of functions (Figs. 26 and 27), or are a function ((inv-q) —> (inv-p)) and (inv-(q→p)) having a relationship of inverse-converse and a function ((inv-p) --+ (inv-q)) and (inv-(p→q)) having a relationship of anti-inverse-converse (Figs. 24 and 25), if the tensor product of the two functions is obtained, it is considered that an axis is generated on "nothing", and phase transition from "0 (nothing)" to "1 (existence)", that is, emergence of consciousness occurs. Summarization causing the phase transition as described above is given by Expression (4) or Expression (5), for example.

$$\lim_{1 \to 0} \quad \underset{0 \to 1}{\text{lim}} \quad \cdots \quad (6)$$

Here, Expression (3) represents that phase transition occurs when the summarization of n —> ∞ and the summarization of n —> 0 overlap each other. On the other hand, by focusing on the vicinity of KU in Expression (3), Expression (6) represents that the phase transition occurs when the summarization from "1" to "0" and the summarization from "0" to "1" overlap each other.

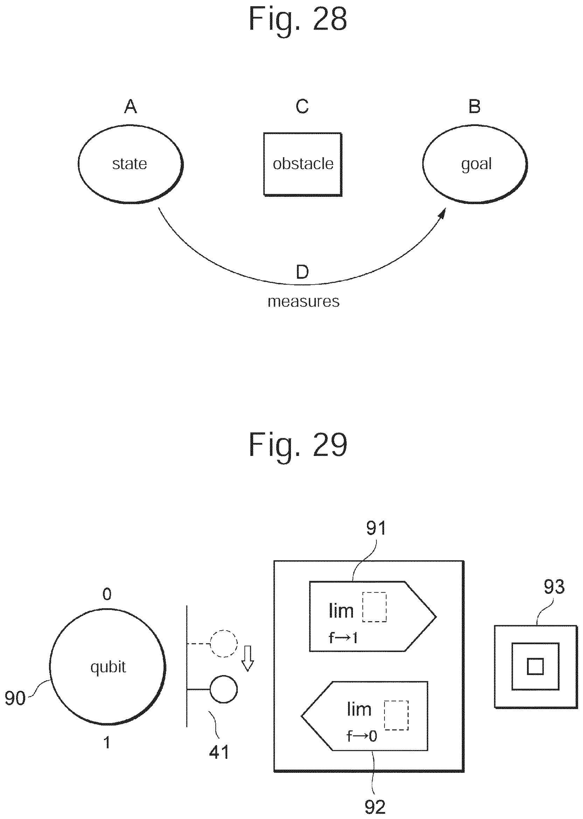

The quantum gate 41 can emerge a function that realizes the will of the robot 10 through the summarization of a plurality of functions that express the thinking of the robot 10. For example, as illustrated in Fig. 28, when an obstacle C exists in the process of the robot 10 moving from the current state A to the goal B, in the conventional method, it is necessary to cause a human to give an instruction to the robot 10 to avoid the obstacle C, or to perform machine learning in advance assuming all obstacles. On the other hand, according to the above-described "emergence of consciousness", even if a human does not give an instruction to the robot 10 to avoid the obstacle C, or even if machine learning is performed in advance assuming all obstacles, the robot 10 can devise measures D for avoiding the obstacle C by itself and move toward the goal B. Thinking unique to robots having a will and consciousness is realized by the quantum gate 41.

<Anti-wave Experiment>

When matter collides with anti-matter, matter and anti-matter annihilate and release the mass as energy. This means that the pre-reaction matter and anti-matter themselves completely disappear and energy equivalent to their annihilated mass remains. From this fact, the present applicant supposes that, when colliding with waves, there may be "anti-waves" that generates the mass (particles). The relationship between waves and anti-waves is symmetrical to the relationship between matter and anti-matter. In contrast to the "empty set" that has only a frame but no content, if the state without a frame but full content is considered as an "anti-empty set", the condition necessary for no content to come out from "encountering between an empty set and an anti-empty set" is the relative existence of "anti-waves". In the anti-world, there is a possibility that the attributes of the wave nature and the particle nature are reversed, and there is a possibility that matter and anti-matter are reversed from this attribute reversal. The wave is a phenomenon in which a spatial distribution pattern of some physical quantity propagates, and there are longitudinal waves and transverse waves. The present applicant supposes that anti-waves are obtained by reversing attributes of longitudinal waves and transverse waves in converse and inverse.

As an anti-wave generation method, for example, the following method is conceivable. An electromagnetic reversing device that reverses an electric field and a magnetic field and a magnetic field generation device that generates a strong magnetic field are produced. The electric field and magnetic field of laser light output from a laser emitter are reversed by the electromagnetic reversing device. This laser light with the electric field and magnetic field reversed is passed through a vacuum glass container from two directions under a strong magnetic field generated by a magnetic field generation device, and it is checked whether the mass is generated from the laser light that collides in the vacuum glass container. If the mass is generated as supposed, it means that the anti-wave is generated in which the electric field and magnetic field of the laser light are reversed.

Here, with reference to Fig. 29, the function f(x) that controls the movement of the slider when summarization is performed by using the quantum gate 41 will be described. In Fig. 29, the reference numeral 90 indicates a quantum bit (Qubit) to be observed. f(x) is a function representing a change in the superposition state of the qubit 90 by observation using waves and anti-waves. f(x) can be obtained as a function representing the movement of the slider that fluctuates in the process of cutting the superposition state of the quantum bits 90. The reference numeral 91 indicates a process in which the superposition state of the quantum bit 90 is determined to be "1" by observation. The reference numeral 92 indicates a process in which the superposition state of the qubit 90 is determined to be "0" by observation. The reference numeral 93 denotes an area indicating the existence probability of the quantum bit 90, and the entire area is called KU. For example, using a singed lasso as f(x) is considered to enable reproduction of a dynamic model of hormones. Also, it can be considered that, for example, using inverse-Bayes as f(x) allows control of a dynamic model of emotion generation.

In order for a robot such as an avatar to secure autonomous will and consciousness, a capability that far surpasses that of today's computers is required. According to the "emergence of consciousness" related to the present invention, it is possible to realize a robot having a brain similar to that of a human through "education" rather than "learning".

Reference Signs List

| | |
|---|---|
| 10... | robot |
| 20... | conversation system |
| 21... | input device |
| 22... | output device |
| 30... | function conversion module |
| 31 ... | quantum gate |
| 40... | function decompression module |
| 41... | quantum gate |
| 50... | artificial ego engine |
| 60... | communication device |
| 70... | human |
| 80... | voice information |
| 90... | qubit |

**Claims**

1. A robot comprising:

   an input device configured to input biometric information handling emotional information of a human;
   a first quantum gate configured to simultaneously input a continuous change amount and a discrete separation quantity of the biometric information and output a plurality of functions derived through cutting of the continuous change amount and the discrete separation quantity;
   a second quantum gate configured to input the plurality of functions and output a function of a summarized state through summarization of the plurality of functions; and
   a communication device configured to transmit the function of the summarized state to another robot.

2. The robot according to claim 1, further comprising:

   an artificial ego engine configured to generate a plurality of functions expressing thinking of the robot,
   wherein the second quantum gate emerges a function that realizes the thinking of the robot through summarization of the plurality of functions expressing the thinking of the robot.

3. The robot according to claim 2,
   wherein two of the plurality of functions expressing the thinking of the robot are a function having an inverse-summarization relationship and a function having a converse-inverse summarization relationship, with respect to one of the plurality of functions.

4. The robot according to claim 2,
   wherein two of the plurality of functions expressing the thinking of the robot are a function having an inverse-converse relationship and a function having an anti-inverse-converse relationship, with respect to one of the plurality of functions.

5. The robot according to any one of claims 1 to 4,
   wherein a function of controlling the summarization by the second quantum gate is a function representing a change in a superposition state of qubits by observation using waves and anti-waves.

6. A communication method performed by a robot, the method comprising:

   a step of inputting biometric information handling emotional information of a human through an input device;
   a step of simultaneously inputting a continuous change amount and a discrete separation quantity of the biometric information to a first quantum gate, and outputting, from the first quantum gate, a plurality of functions derived through cutting of the continuous change amount and the discrete separation quantity by the first quantum gate;
   a step of inputting the plurality of functions to a second quantum gate and outputting, from the second quantum gate, a function of a summarized state through summarization of the plurality of functions by the second quantum gate; and

a step of transmitting the function of the summarized state to another robot through a communication device.

# Fig. 1

# Fig. 2

# Fig. 3

# Fig. 4

meaning of symbol

operation instruction

*f*

maintaining homeostasis

*h*

manner of motion corresponds to f

maintain repetition of varying f = homeostasis

continuous

A    *x*  :  *y*    B

A(0)    B(1)

move between A and B

f of h = fluctuating resembles nature of wave fluctuation of A(0) and B(1) generates uncertainty due to h fluctuation

$$A \, \underset{}{Q} \, B$$

= state description

$$A \, \underset{}{Q}^f \, B$$

$$= \begin{cases} A(0) \ \text{or} \ B(1) \\ x{:}y \ (\text{fluctuation}) \\ f \ (\text{fluctuation is} \\ \quad \text{also possible}) \end{cases}$$

$$A \, \underset{}{Q}^h \, B$$

= changing function

# Fig. 5

$$A \, \underset{}{Q} \, B$$

X        y        v    A

x    B

criterion for which A and B compete with each other

x-y ratio change = continuous quantity

X

y        v    A

x    B

B determination = separation quantity because y falls below criterion

with balance, separation quantity and continuous quantity can be expressed simultaneously.

# Fig. 6

inverse-Riemann sphere of front

north pole

north pole (∞)

north pole

point Z

Riemann sphere

inverse-anti-north pole B
of front

south pole
(origin 0)

back surface is inverse-
converse z plane (B) of front

origin 0

z plane

anti-south
pole A

converse-Riemann sphere

inverse-anti-north pole B
of converse

converse-z plane (A)

anti-north pole A
(anti-∞)

back surface is inverse-
converse z plane (B) of converse

anti-north
pole

anti-north
pole

∞

anti-∞

inverse-Riemann sphere of converse

# Fig. 7

anti A

| anti p | ←—— pair ——→ | anti q |

characteristics are opposite

exchange of
p → q characteristic

characteristics are opposite

A

| p | ←—— pair ——→ | q |

# Fig. 8

# Fig. 9

front of p
inverse of p

front of q
inverse of q

inverse

definition of inverse by cut & reverse

$$(p \Rightarrow q) - (\text{inv-}p \Rightarrow \text{inv-}q)$$

p
inv-p

q
inv-q

definition of inverse by summarize & reversee

front of p ⇒ q
inverse of p ⇒ q

front of q ⇒ p
inverse of q ⇒ p

$$(p \Rightarrow q) - \text{inv-}(p \stackrel{\circ}{\circ} q)$$

inv-(q∘p)
inv-(p∘q)

inverse

EP 4 261 740 A1

# Fig. 10

$$(inv\text{-}p) \Rightarrow (inv\text{-}q)$$

(inv-p)
=(not-p)

(inv-q)
(=not-q)

cutting

turn over in
pieces

turn over in pieces

$$(inv\text{-}p) \Rightarrow (inv\text{-}q)$$

**Digital**

turn over in pieces

$$p \Rightarrow q$$

distinguish contraposition
by inv

**Quantal**

turn over
together

summari-
zation

turn over together

inv-(p⇒q)        inv-(q⇒p)

turn over together

inv-(p⊋q)

(inv-(p)) ⇒ (inv-(q)) when viewed from direct field

(inv-(p)) when viewed from
direct field

(inv-(q)) when viewed from
direct field

$$inv\text{-}(p \Rightarrow q)$$

EP 4 261 740 A1

# Fig. 11

distinguishment of contraposition by expression of
inv generates room for KU being put
(combine quantum theory and general theory of relativity)

# Fig. 12

EP 4 261 740 A1

Fig. 13

# Fig. 14

anti in matter world by anti-Einstein field hypothesis

EP 4 261 740 A1

# Fig. 15

anti of consciousness

# Fig. 16

phase transition by 오

# Fig. 17

anti-absoluteness

anti

direct $(p \Rightarrow q)$ — $(\text{inv-}q \Rightarrow \text{inv-}p)$ anti-direct

cutting and converse

$\text{inv-}(q \Rightarrow p)$

summarization and converse

converse $(q \overset{\circ}{\supset} p)$ — $\text{inv-}(q \overset{f}{\supset} p)$ anti-converse

$(q \Rightarrow p)$

reversal of anti

main

# Fig. 18

matter    anti-matter

summarization into function by annihilating time axis

anti-mapping and phase transition according to definition of anti

simultaneously calculate Digital and Analog

if this flow is summarized?

time is put into symbol by moving function

$0$   time   time $\infty$   $0$   $\infty$

$\lim\limits_{n \to \infty}$

$\lim\limits_{n \to 0}$

$\lim\limits_{n \to 0}$

time settled

$\infty$   $0$

Fig. 19

# Fig. 20

this state is obtained by superposition of
attribute reversal and vector
summarization of KU = number of times of twist
(determination by density and threshold value)

can be controlled by
difference
in density !

KU(0♀1)

q ➡ p

inv-(q⊙p)

inv-(p⊙q)

p ➡ q

| Entropy | ♀ | Negentropy |
|---|---|---|
| 1 | ♀ | 0 |
| 0 | ♀ | ∞ |

# Fig. 21

# Fig. 22

# Fig. 23

# Fig. 24

possibility of phase transition by inverse-converse and anti-converse-inverse assuming reversal of complex plane

# Fig. 25

possibility of phase transition by inverse-converse and
anti-converse-inverse not assuming reversal of complex plane

phase transition

anti-inverse-
converse $(inv-p) \Rightarrow (inv-q)$    simultaneous
establishment

cutting-converse field

$(inv-p)$
$=(not-p)$

inverse-converse $(inv-q) \Rightarrow (inv-p)$

$(inv-q)$
$(=not-q)$

P                                              Q

direct $p \Rightarrow q$

p                                              q

converse $q \Rightarrow p$

bijection                                      bijection

same type of
structure

anti-inverse-converse $inv-(p \Rightarrow q)$

$(inv-(p)) \Rightarrow (inv-(q))$ when viewed
from direct field

p

$(inv-(p))$ when viewed from
direct field

inverse-
converse $inv-(q \Rightarrow p)$

q

$(inv-(q))$ when viewed from
direct field

$(inv-(q)) \Rightarrow (inv-(p))$ when viewed from direct field

summarization-
converse field

phase transition

$(inv-p)$
$(inv-(inv-(p)))$ when viewed from direct field

$(inv-q)$
$(inv-inv-(q)))$ when viewed from direct field

EP 4 261 740 A1

# Fig. 26

possibility of phase transition by inverse-summarization and
converse-inverse summarization assuming reversal of complex plane

# Fig. 27

possibility of phase transition by inverse-summarization and
converse-inverse summarization not assuming reversal of complex plane

phase transition

anti-inverse-
converse $(\text{inv-p}) \Rightarrow (\text{inv-q})$

simultaneous
establishment

cutting-converse field

$(\text{inv-p})$
$=(\text{not-p})$

$(\text{inv-q})$
$(=\text{not-q})$

inverse-converse $(\text{inv-q}) \Rightarrow (\text{inv-p})$

P

Q

direct $p \Rightarrow q$

p

q

converse $q \Rightarrow p$

bijection

same type of
structure

converse-inverse
summarization

$\text{inv-}(q \stackrel{\supset}{\supset} p)$

$(\text{inv-(q)}) \underline{O} (\text{inv-(p)})$ when viewed from direct field

summarization-
converse field

p

q

$(\text{inv-(p)})$ when viewed from
direct field

inverse-
summarization

$\text{inv-}(p \stackrel{\supset}{\supset} q)$

$(\text{inv-(q)})$ when viewed from
direct field

$(\text{inv-(p)}) \underline{O} (\text{inv-(q)})$
when viewed from direct field

phase
transition

$(\text{inv-p})$

$(\text{inv-q})$

$(\text{inv-(inv-(p)))}$ when viewed from direct field

$(\text{inv-inv-(q)))}$ when viewed from direct field

# Fig. 28

A

state

C

obstacle

B

goal

D

measures

# Fig. 29

91

0

qubit

90

1

41

lim □
f→1

lim □
f→0

92

93

Fig. 30

## INTERNATIONAL SEARCH REPORT

| International application No. |
| --- |
| **PCT/JP2021/045541** |

**A.    CLASSIFICATION OF SUBJECT MATTER**

*G06N 3/00*(2006.01)i; *G06N 10/00*(2022.01)i
FI:    G06N10/00; G06N3/00

According to International Patent Classification (IPC) or to both national classification and IPC

**B.      FIELDS SEARCHED**

Minimum documentation searched (classification system followed by classification symbols)

G06N3/00; G06N10/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.      DOCUMENTS CONSIDERED TO BE RELEVANT**

| Category* | Citation of document, with indication, where appropriate, of the relevant passages | Relevant to claim No. |
| --- | --- | --- |
| A | MITSUYOSHI, Shunji et al. Some hypothesis to derive an anti-Einstein field. DHU JOURNAL. 2019, vol. 6, pp. 3-24<br>entire text, all drawings | 1-6 |
| P, A | JP 2021-67964 A (THE UNIVERSITY OF TOKYO) 30 April 2021 (2021-04-30)<br>entire text, all drawings | 1-6 |

☐ Further documents are listed in the continuation of Box C.          ☑ See patent family annex.

| *    Special categories of cited documents: | "T"   later document published after the international filing date or priority date and not in conflict with the application but cited to understand the principle or theory underlying the invention |
| --- | --- |
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
| --- | --- |
| **31 January 2022** | **08 February 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2021/045541**

| Patent document cited in search report | Publication date (day/month/year) | Patent family member(s) | Publication date (day/month/year) |
|---|---|---|---|
| JP 2021-67964 A | 30 April 2021 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020204758 A

**Non-patent literature cited in the description**

- Moral Decision Making in Autonomous Systems: Enforcement, Moral Emotions, Dignity, Trust, and Deception. IEEE, March 2012, vol. 100
- *Technologist's magazine,* vol. 22
- spacetime calculation concept in the anti-Einstein field. *DHU JOURNAL,* 2019, vol. 06, 3-14
- *DHU JOURNAL,* 2019, vol. 06, 3-14
- **YOICHIRO NAMBU.** *spontaneous breaking of symmetry,* 1961
- Quantal. ST exceeds IT. 2002